# EUROPEAN PATENT APPLICATION

(11) **EP 2 853 176 A1**
(43) Date of publication of application: **01.04.2015**
(21) Application number: 14186445.4
(22) Date of filing: 25.09.2014
(51) Int. Cl.: A47C 27/06, A47C 23/043

(54) **High tension coil spring for bed mattress having means for preventing frictional noise**

(30) Priority: 25.09.2013 KR 20130113991; 30.09.2013 KR 20130116000
(71) Applicant: Ahn, Yoo Soo, Gyeonggi-do 463-820 (KR)
(72) Inventor: Ahn, Yoo Soo, Gyeonggi-do 463-820 (KR)
(74) Representative: Maiwald Patentanwalts GmbH

(57) **Abstract**

A high tension coil spring for a bed mattress having an exposed wiring portion which is formed on the coil spring and works together with a body spring to absorb an external load. A gap A is provided on at least one of upper and lower end wiring portions 14 and 14' so as to define a space in which at least one of turns 16-5 and 16-5' of upper and lower exposed wiring portions 16 and 16' moves upward and downward while the coil spring is being compressed. Frictional noise between the upper and lower end wiring portions and the upper and lower turns 16-5 and 16-5' of upper and lower exposed wiring portions 16 and 16' is fundamentally prevented. The elasticity of the upper and lower exposed wiring portions is increased. The wiring portions move only upward and downward without being displaced or deformed in the lateral direction, thereby increasing longevity.

## Description

### CROSS REFERENCE TO RELATED APPLICATION

The present application claims priority from Korean Patent Application Number 10-2013-116000 filed on September 30, 2013, claiming priority from Korean Patent Application Number 10-2013-113991 filed on September 25, 2013, the entire contents of which are incorporated herein for all purposes by this reference.

### BACKGROUND OF THE INVENTION

### Field of the Invention

The present invention relates to a high tension coil spring for a bed mattress having an exposed wiring portion which is formed on the coil spring and works together with a body spring to absorb an external load, and more particularly, to a high tension coil spring for a bed mattress having a means for preventing frictional noise which can prevent noise that is created by the friction between an exposed wiring portion and a surrounding wiring portion while the exposed wiring portion is being compressed, and which can significantly increase the elasticity of the exposed wiring portion.

### Description of Related Art

In General, a bed mattress is an instrument for sleeping which provides a cushion or a buffering force using cushion members which are respectively stacked on the upper surface and the lower surface of a spring assembly. The spring assembly includes a plurality of coil springs which are provided between upper and lower frames inside the bed mattress and are regularly disposed at preset distances in the column and row directions.
In addition, "exposed wire springs" were developed and have been used as a means for enhancing the cushioning and buffering force of the bed mattress. The exposed wire springs include coil springs which are disposed in the top-bottom direction between the upper and lower edge members such that the coil springs protrude a preset height above the upper edge member so as to be exposed.

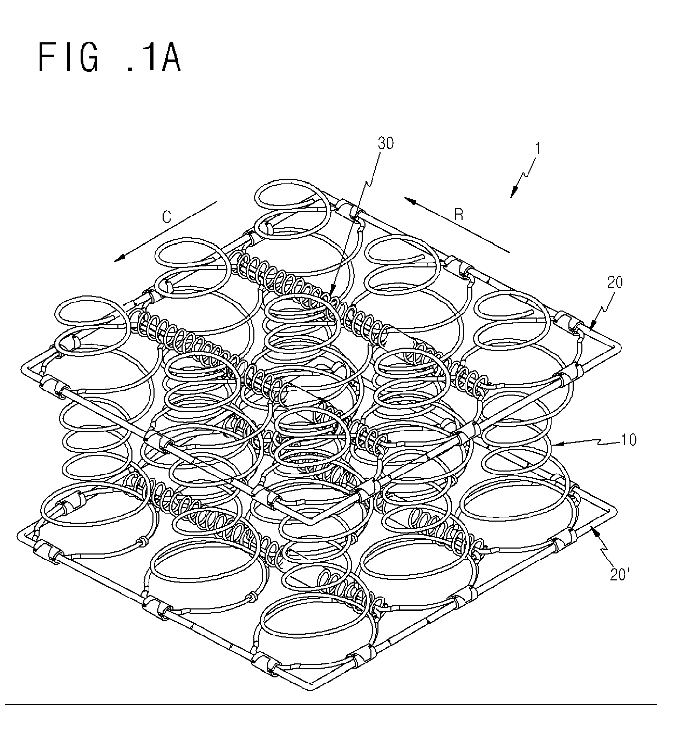

For instance, as shown in FIG. 1A, a spring assembly 1 includes upper and lower edge members 20 and 20', coil springs 10 which are arranged in row and column directions R and C within the space between the upper edge member 20 and the lower edge member 20', and helical coils 30 which are spirally engaged with the coil springs 10 in the row direction R.

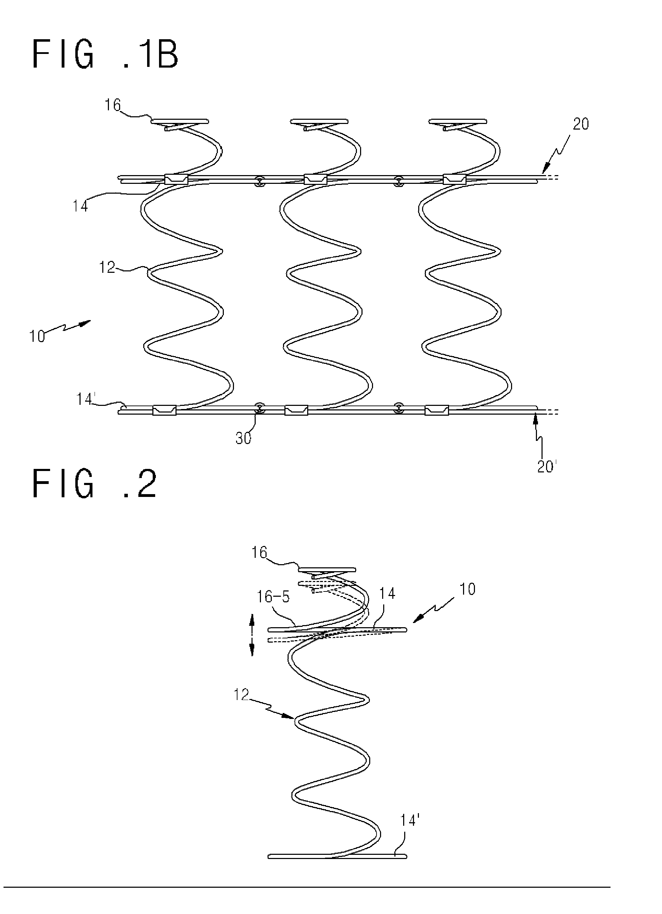

In addition, as shown in FIG. 1B, each of the coil springs 10 includes a body wiring portion 12 situated in a space between the upper edge member 20 and the lower edge member 20', end wiring portions 14 and 14' provided on both ends of the body wiring portion 12 so as to be engaged with the upper and lower edge members 20 and 20', and one or two exposed wiring portions 16 extending from the end wiring portion 14 so as to be exposed from one or both of the edge members 20 and 20'.

Here, in the case of attempting to set the spring assembly 1, when the helical coils 30 are engaged in the state in which the coil springs 10 are set at preset distances from each other between the edge members 20 and 20', the exposed wiring portions 16 are set such that they protrude above the upper edge member 20 and/or below the lower edge member 20'.

In addition, when the spring assembly 1 is applied to a bed mattress, the exposed wiring portions 16 absorb shock when a small load is applied in response to, for example, rolling over of a mattress user, and the body wiring portions 12 absorb shock when a large load is applied from the mattress user.

The coil springs 10 advantageously increase the comfort and convenience of the user since the exposed wiring portions 16 and the body wiring portions 12 properly distribute the shock-absorbing function in response to variation in the load applied to the bed mattress. However, the coil springs 12 have at least the following problems.

First, as shown in FIG. 2, in the process in which at least one of the coil springs 10 is compressed at the moment that the bed mattress is subjected to a load, a contact wiring portion 16-5 of the exposed wiring portion 16 abut to the end wiring portion 14 which is positioned below while moving down. This consequently creates noise due to the friction between the exposed wiring portion 16 and the end wiring portion 14.

Second, when a large load is applied to the bed mattress, the exposed wiring portion 16 of the spring assembly is compressed, and concurrently, the body wiring portion 12 is compressed at a high speed. Rapid compression of the exposed wiring portion 16 increases the friction between the exposed wiring portion 16 and the end wiring portion 14, thereby creating frictional noise.

Third, when a load is applied to the bed mattress, the exposed wiring portion abuts to the end wiring portion while being compressed, whereby the elasticity of the exposed wiring portion is limited. Accordingly, there is an urgent need for solutions that can prevent stress due to frictional noise between the exposed wiring portions 16 and the end wiring portions 14 while the bed mattress is being used and increase the longevity of the coil spring by enhancing the elasticity of the exposed wiring portion.

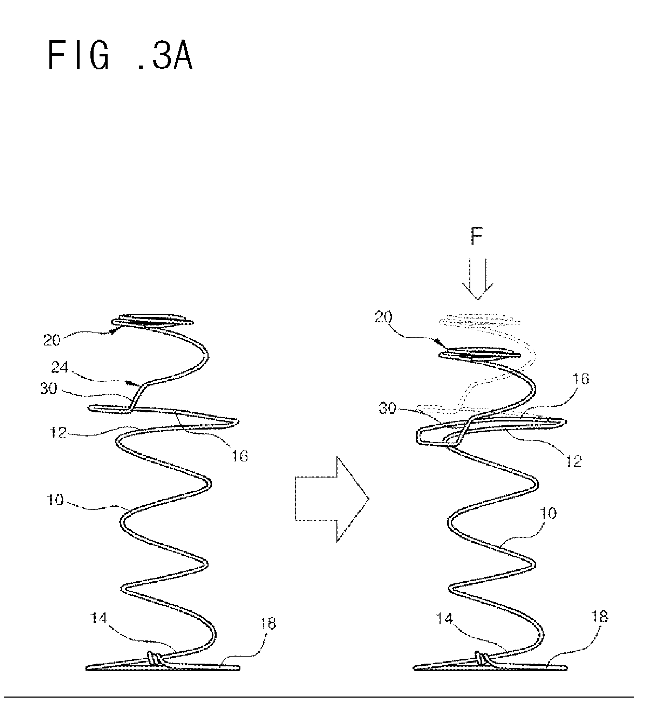

As shown in FIG. 3A, an approach was proposed in a coil spring that was previously invented by the applicant (Korean Patent No. 10-0717543, United States Patent No. 7,677,541 B2). This coil spring includes a body spring 10 and an exposure wire spring 20, in which a contact-preventing end 30a is provided on a connection end portion 24 which connects the exposure wire spring 20 to the body spring 10.

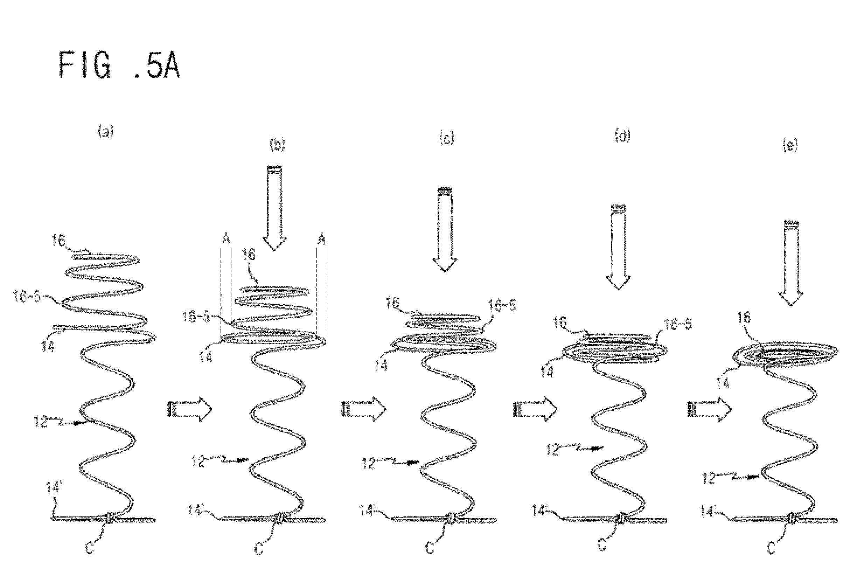

Although the coil spring shown in FIG. 3A prevents frictional noise between the body spring 10 and the exposure wire spring 20 to a certain level using the contact-preventing end 30, the coil spring fails to completely prevent frictional noise since there is no disclosure of a structure that fundamentally prevents frictional noise between the upper/lower end wiring portions 14 and 14' and the upper/lower turns 16-5 and 16-5' of the upper/lower exposed wiring portions 16 and 16', as shown in FIG. 5A, FIG. 5B, FIG. 7A, FIG. 7B, FIG. 9A and FIG. 9B. This structure shown in FIG. 5A, FIG. 5B, FIG. 7A, FIG. 7B, FIG. 9A and FIG. 9B provides a space in which the upper/lower end wiring portions 14 and 14' and the upper/lower turns 16-5 and 16-5' of the upper/lower exposed wiring portions 16 and 16' can move upward and downward without contact, thereby fundamentally preventing noise.

In addition, although the coil spring shown in FIG. 3A is focused on the contact-preventing end 30 which prevents frictional noise, there is a drawback in that the amount of elasticity with which the exposure wire spring 20 moves upward and downward is limited since the exposure wire spring 20 has a small number of turns.

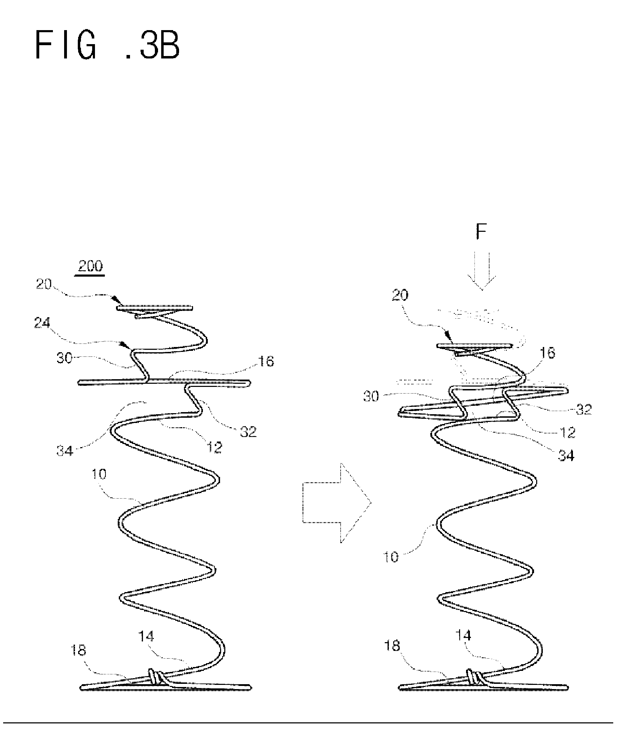

Furthermore, as shown in FIG. 3B, an another approach was proposed in a coil spring that was previously invented by the applicant (Korean Patent No. 10-0717535, United States Patent No. 8,109,490). This coil spring includes a body spring 10 and an exposure wire spring 20, in which contact-preventing/rigidity-reinforcing ends 30 and 32 are provided on a connection end portion 24 which connects the exposure wire spring 20 to the body spring 10, thereby preventing frictional noise between the body spring 10 and the exposure wire spring 20.

Although the coil spring shown in FIG. 3B prevents frictional noise between the body spring 10 and the exposure wire spring 20 to a certain level using the contact-preventing/rigidity-reinforcing ends 30 and 32, the coil spring fails to completely prevent frictional noise since there is no disclosure of a structure that fundamentally prevents frictional noise between the upper/lower end wiring portions 14 and 14' and the upper/lower turns 16-5 and 16-5' of the upper/lower exposed wiring portions 16 and 16', as shown in FIG. 5A, FIG. 5B, FIG. 7A, FIG. 7B, FIG. 9A and FIG. 9B. This structure shown in FIG. 5A, FIG. 5B, FIG. 7A, FIG. 7B, FIG. 9A and FIG. 9B provides a space in which the upper/lower end wiring portions 14 and 14' and the upper/lower turns 16-5 and 16-5' of the upper/lower exposed wiring portions 16 and 16' can move upward and downward without contact, thereby fundamentally preventing noise.

In addition, although the coil spring shown in FIG. 3B is focused on the contact-preventing end 30 which prevents frictional noise, there is a drawback in that the amount of elasticity with which the exposure wire spring 20 moves upward and downward is limited since the exposure wire spring 20 has a small number of turns.

The information disclosed in the Background of the Invention section is provided only for better understanding of the background of the invention, and should not be taken as an acknowledgment or any form of suggestion that this information forms a prior art that would already be known to a person skilled in the related art.

### Related Art Document

Patent Document 1: Korean Patent No. 10-0717543 (United States Patent No. 7,677,541)
Patent Document 2: Korean Patent No. 10-0717535 (United States Patent No. 8,109,490)

### BRIEF SUMMARY OF THE INVENTION

Various aspects of the present invention provide a coil spring for a bed mattress having a means for preventing frictional noise which can prevent noise that is created by the friction between an exposed wiring portion protruding above or below a spring assembly and a surrounding wiring portion while the exposed wiring portion is being compressed, and which can significantly increase the elasticity of the exposed wiring portion.

In an aspect of the present invention, provided is a high tension coil spring for a bed mattress that includes: a body wiring portion which is placed in a space between an upper edge member and a lower edge member of a mattress frame; upper and lower end wiring portions which are respectively provided on the opposite ends of the body wiring portion and are set within a range in which upper/lower edge members are disposed; and an upper exposed wiring portion which upwardly extends from the upper end wiring portion exposed from the upper edge member and/or a lower exposed wiring portion which downwardly extends from the lower end wiring portion exposed from the lower edge member.

The high tension coil spring for a bed mattress is characterized in that turns of the upper exposed wiring portion and/or turns of the lower exposed wiring portion respectively have a declining diameter to be compressed without being contacted by each other.

Each of the upper and lower end wiring portions has an inner diameter to be apart by a gap(A) from the upper and/or the lower exposed wiring portion so that the latter may be compressed without being contacted with the former.

Thereby, frictional noise between the upper and/or the lower end wiring portions and the upper and/or the lower exposed wiring portions is prevented.

In another aspect of the present invention, provided is a high tension coil spring for a bed mattress, wherein each of the upper and lower end wiring portions has an inner diameter longer than the outer diameter of the turns of the body wiring portion.

In other aspect of the present invention, provided is a high tension coil spring for a bed mattress, wherein each of the upper and lower end wiring portions has an inner diameter shorter than or equal to the outer diameter of the turns of the body wiring portion.

As set forth above, the present invention has the following effects.

First, since the coil spring structure is provided with the gap which forms a path along which the exposed wiring portion moves upward and downward, it is possible to consequently prevent friction that is created due to contact between the exposed wiring portion and the end wiring portion while the exposed wiring portion is being compressed, thereby fundamentally preventing noise.

Second, since the coil spring structure is provided with the gap which forms a path along which the exposed wiring portion moves upward and downward, the exposed wiring portions and the body wiring portion move only upward and downward without being displaced or deformed in the lateral direction, thereby increasing longevity.

Third, in the state where frictional noise between the exposed wiring portion and the end wiring portion of the coil spring is fundamentally prevented, the number of turns of the exposed wiring portions are provided with a plurality of turns such that the exposed wiring portions form a spring layer separate from the body wiring portion. Consequently, small and large loads applied to the bed mattress are discriminated and suitable amounts of buffering force are provided, and at the same time, the elasticity of the upper and lower exposed wiring portions is enhanced, thereby improving the quality of a product.

Fourth, the process of foaming the exposed wiring portion, which was proposed in Korean Patent No. 10-0444347 United States Patent No. 6,983,503 as means for preventing frictional noise in the coil spring, becomes unnecessary. It is possible to preclude equipment which seals the exposed wiring portion and the sealing process as well as reducing the price for purchasing that equipment and the cost for the process, thereby improving productivity.

Fifth, as the number of turns of each of the upper and lower exposed wiring portion (16,16') ranges from 3 to 6, the elasticity of the coil spring is enhanced, thereby improving the quality of a product.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1A and FIG.1B show the assembled state of a spring assembly of the related art, in which FIG. 1A is a perspective view of the spring assembly of the related art, and FIG. 1B is a cross-sectional view of the spring assembly of the related art;
FIG. 2 is a cross-sectional view illustrating creation of noise from the coil spring of the related art;
FIG. 3A and FIG. 3B are cross-sectional views showing coil springs for preventing frictional noise that were previously invented by the applicant;

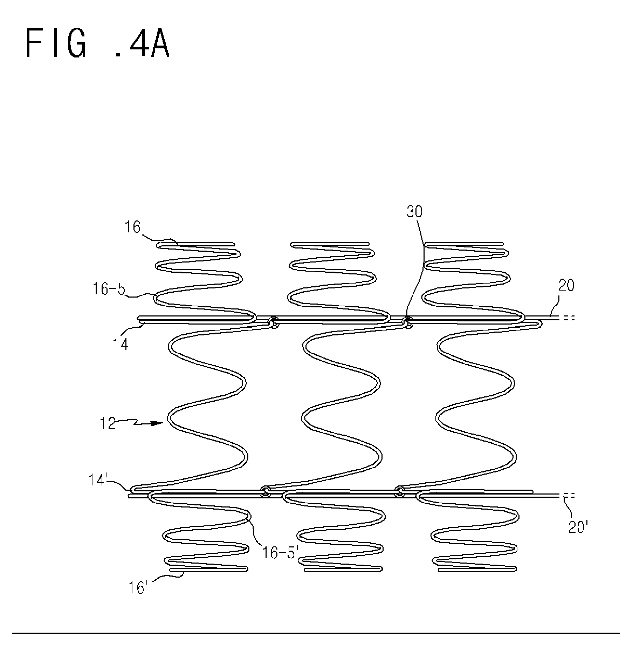

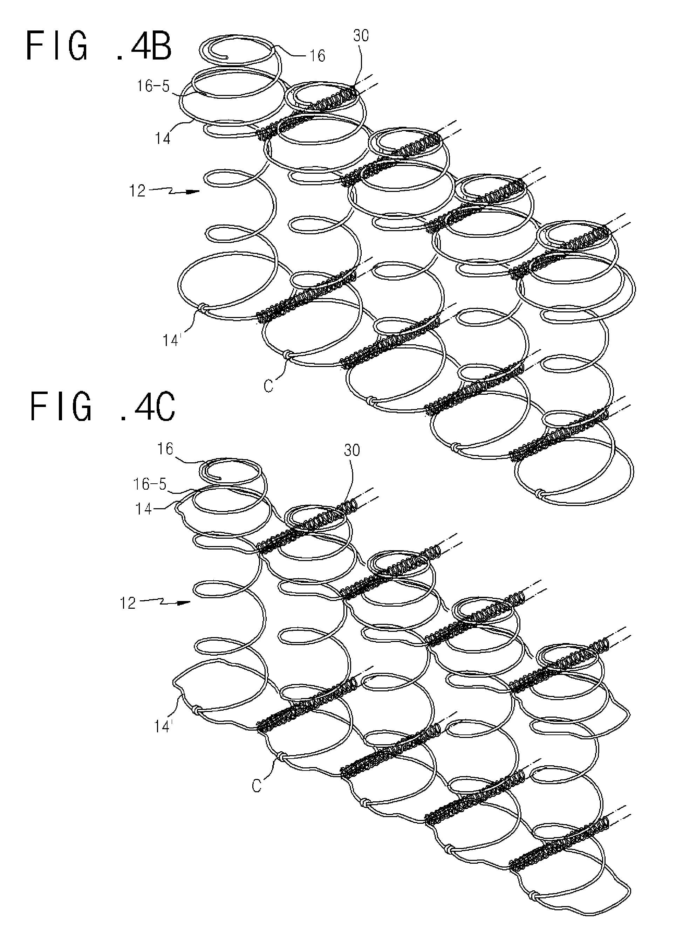

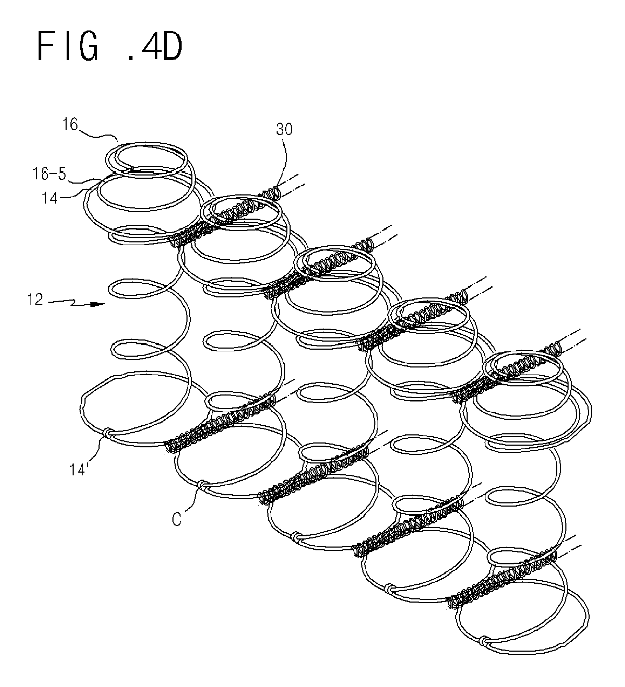

FIG. 4A, FIG. 4B, FIG. 4C and FIG. 4D are views showing the engaged state of a spring assembly according to the present invention, in which FIG. 4A is a cross-sectional view of the engaged state of the spring assembly, and FIG. 4B to FIG. 4D are perspective views of the engaged state of the spring assembly;

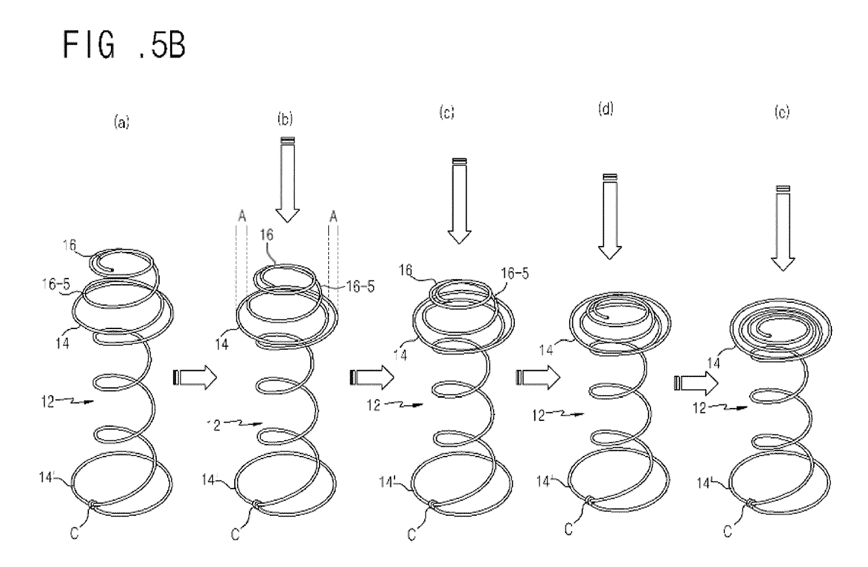

FIG. 5A and FIG. 5B show a first concept of a process in which an upper exposed wiring portion of a coil spring wherein each of a upper and lower end wiring portions has an inner diameter longer than the outer diameter of the turns of the body wiring portion according to the present invention is compressed, in which upper and lower end wiring portions of the coil spring have the shape of a round coil spring, in which FIG. 5A is a cross-sectional view of the process in which the coil spring is compressed, and FIG. 5B is a perspective view of the process in which the coil spring is compressed;

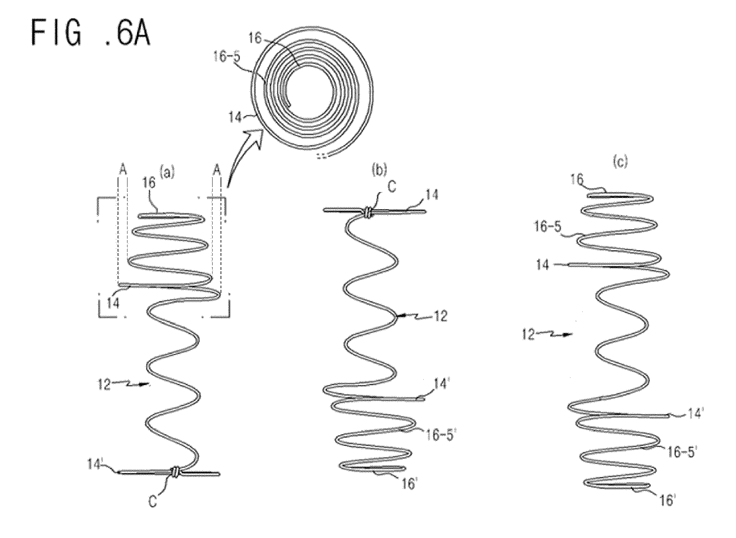

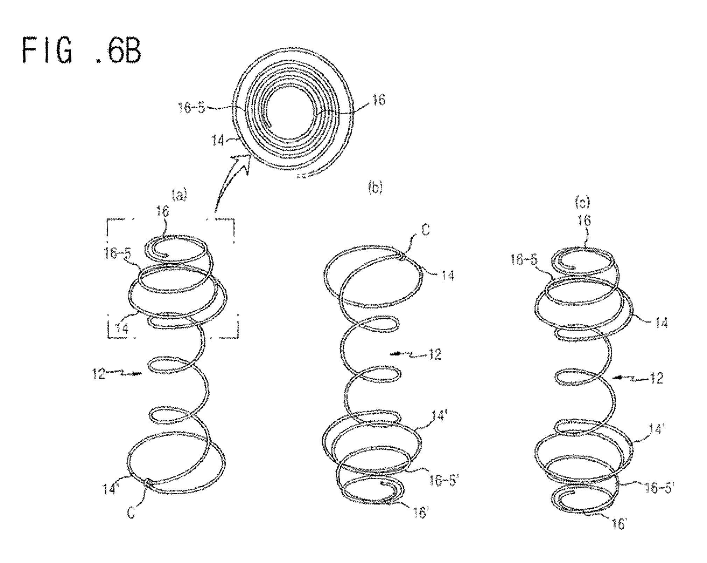

FIG. 6A and FIG. 6B show coil springs according to the present invention, in which upper and lower end wiring portions have the shape of a round coil spring, in which FIG. 6A is a cross-sectional view of first to third embodiments of the coil spring, and FIG. 6B is a perspective view of the first to third embodiments of the coil spring;

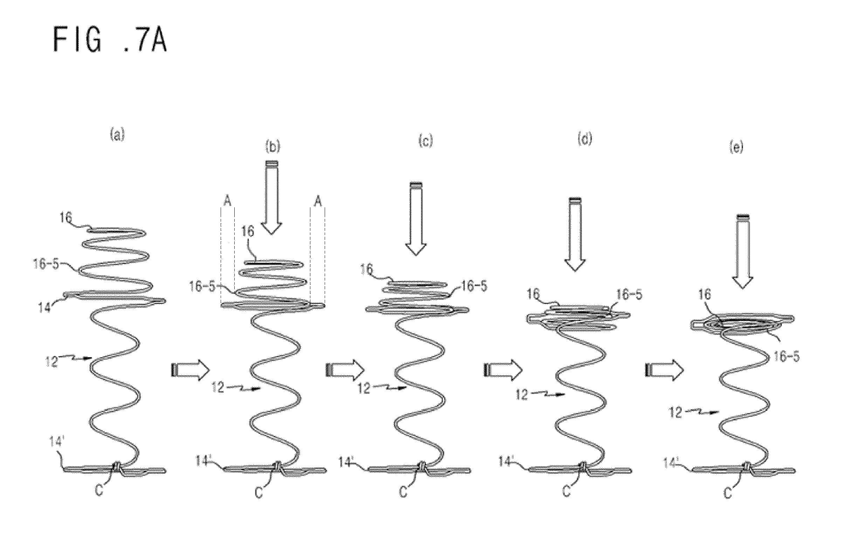

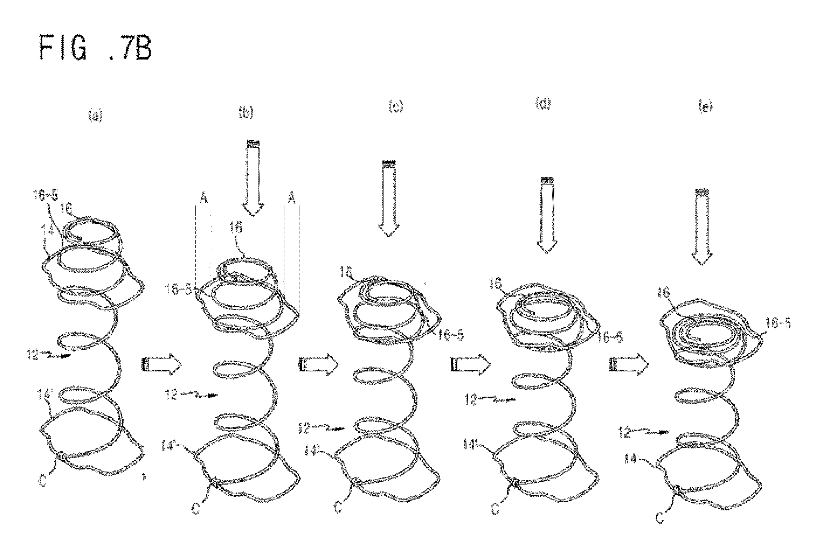

FIG. 7A and FIG. 7B show a second concept of a process in which an upper exposed wiring portion of a coil spring according to the present invention is compressed, in which upper and lower end wiring portions of the coil spring have the shape of an offset coil spring, in which FIG. 7A is a cross-sectional view of the process in which the coil spring is compressed, and FIG. 7B is a perspective view of the process in which the coil spring is compressed;

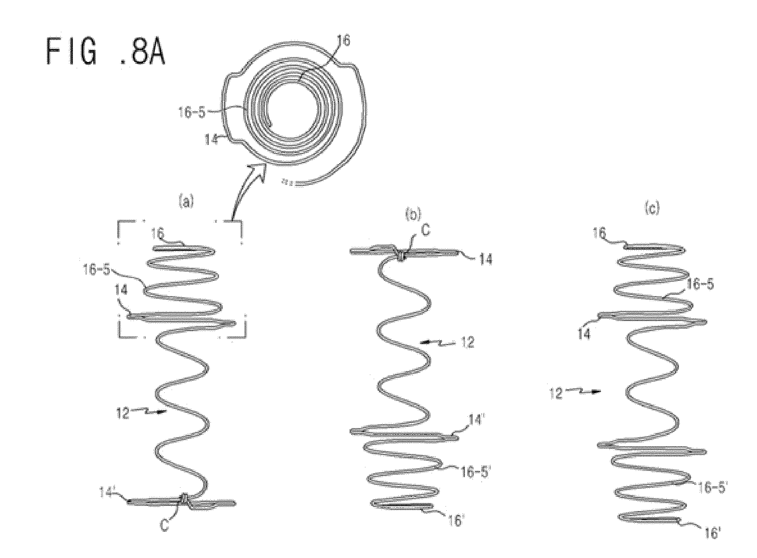

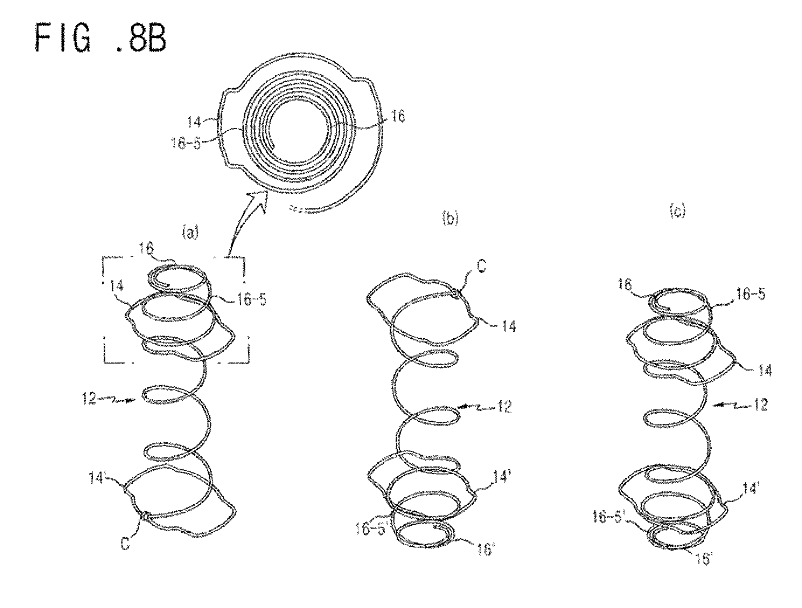

FIG. 8A and FIG. 8B show coil springs according to the present invention, in which upper and lower end wiring portions have the shape of an offset coil spring, in which FIG. 8A is a cross-sectional view of fourth to sixth embodiments of the coil spring, and FIG. 8B is a perspective view of the fourth to sixth embodiments of the coil spring;

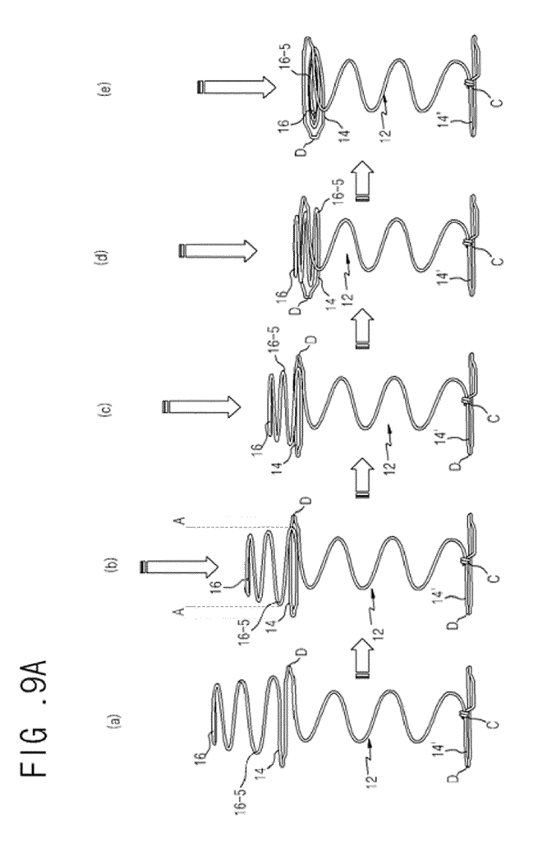

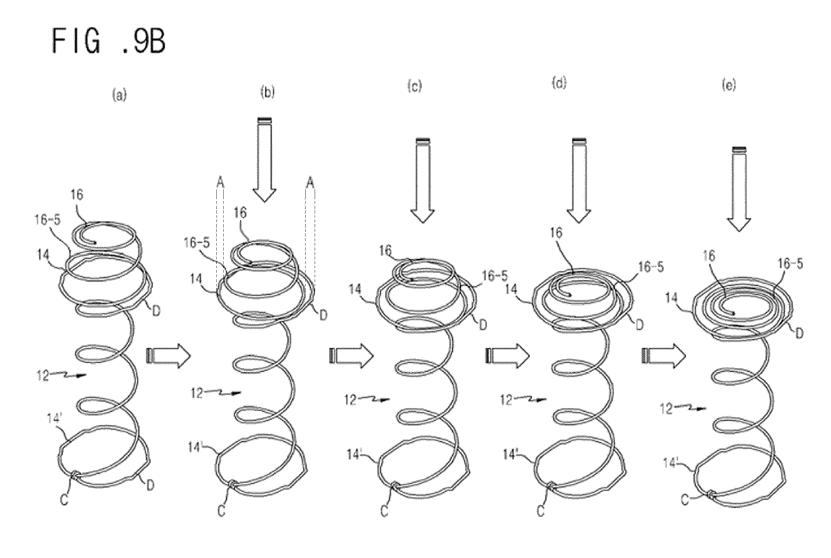

FIG. 9A and FIG. 9B show a third concept of a process in which an upper exposed wiring portion of a coil spring according to the present invention is compressed, in which upper and lower end wiring portions of the coil spring have the shape of a round-offset coil spring, in which FIG. 9A is a cross-sectional view of the process in which the coil spring is compressed, and FIG. 9B is a perspective view of the process in which the coil spring is compressed;

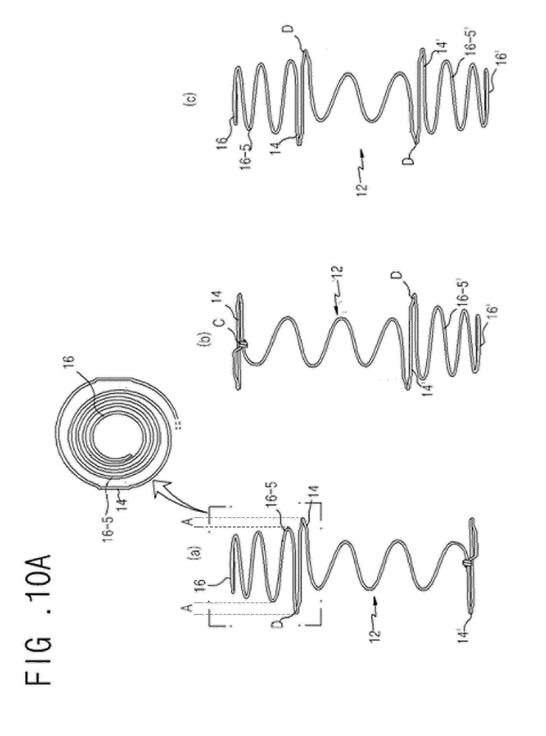

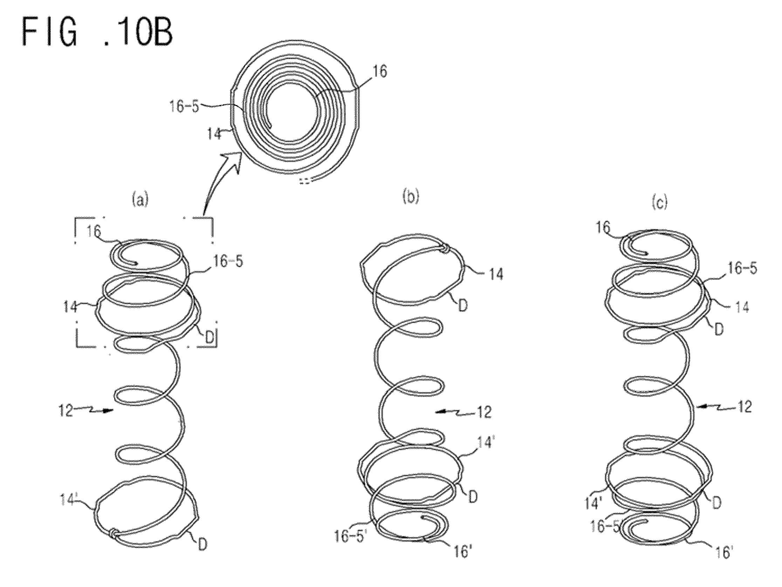

FIG. 10A and FIG. 10B show coil springs according to the present invention, in which upper and lower end wiring portions have the shape of a round-offset coil spring, in which FIG. 10A is a cross-sectional view of seventh to ninth embodiments of the coil spring, FIG. 10B is a perspective view of the seventh to ninth embodiments of the coil spring;

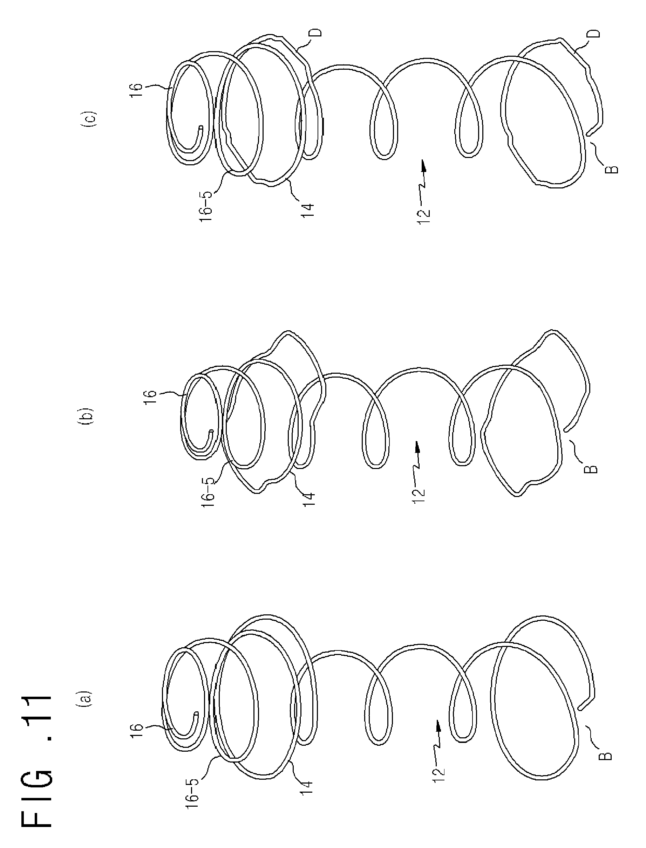

FIG. 11 is a perspective view showing coil springs according to the present invention that are implemented as a round coil spring, an offset coil spring and a round offset coil spring, in each of which a coil end of the upper and lower end wiring portions forms a linear free end B which is opened without being engaged with the wiring portion; and

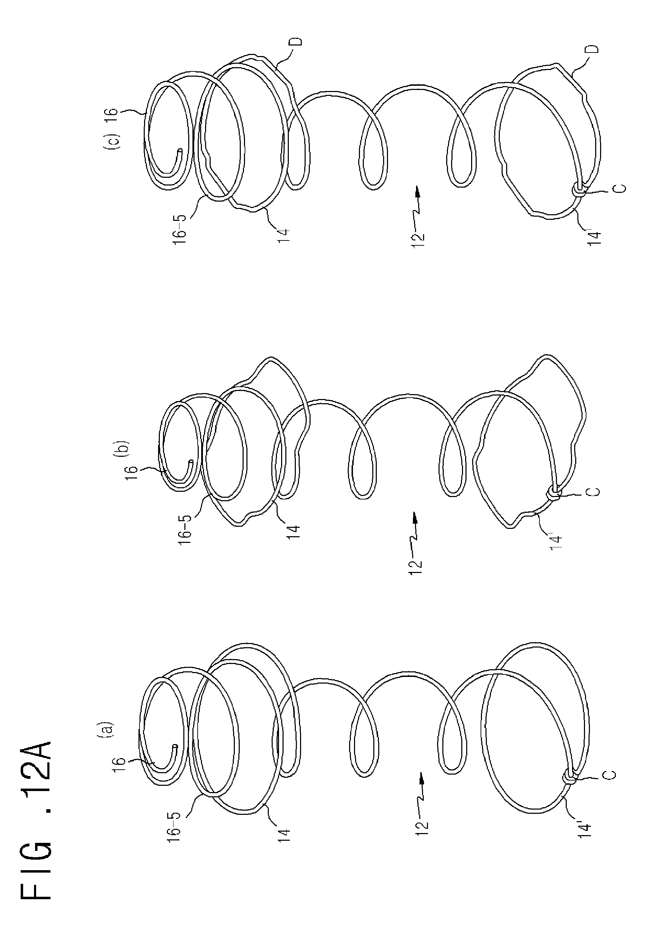

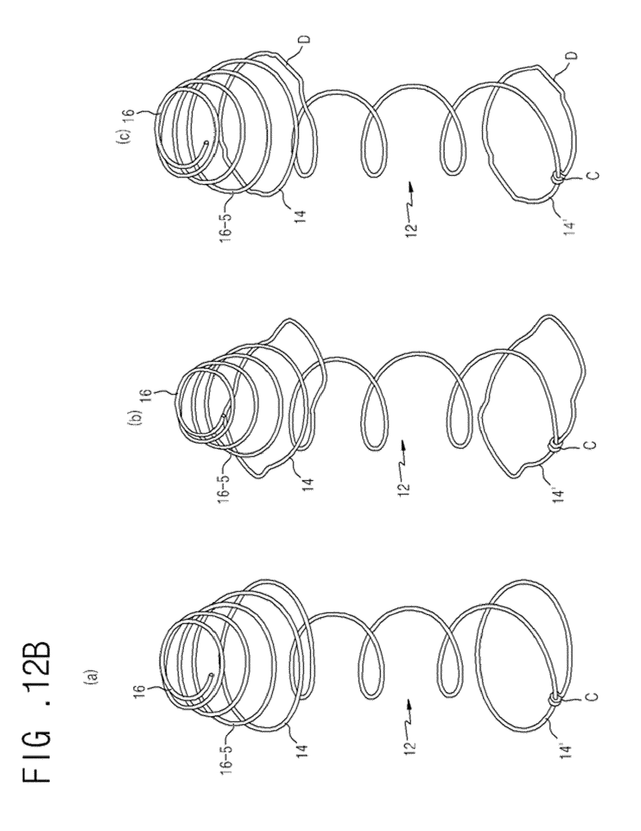

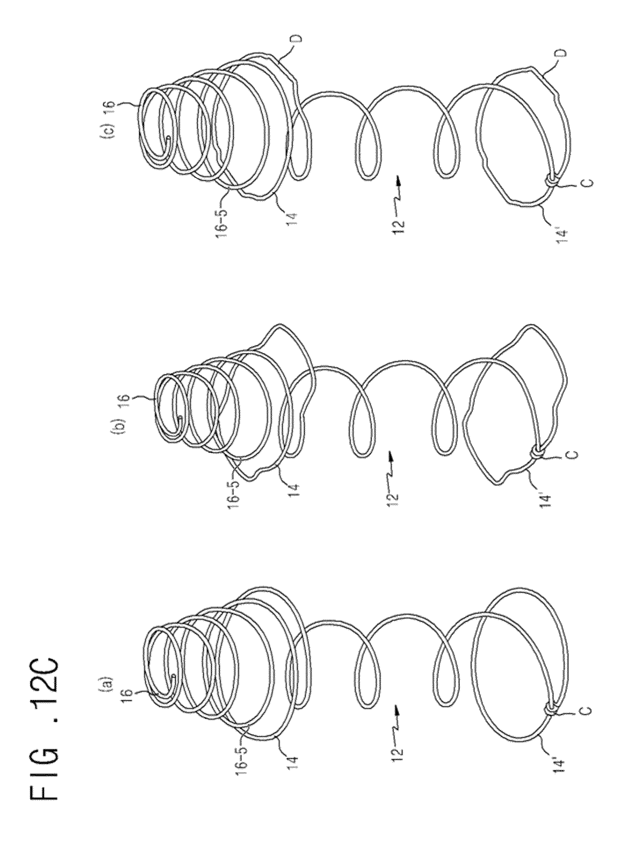

FIG. 12A, FIG. 12B and FIG. 12C show coil springs according to the present invention, in which FIG. 12A is a perspective of the coil spring which has a handcuff portion C and which the number of turns of the exposed wiring portion is four, FIG. 12B is a perspective view of the coil spring which has a handcuff portion C and which the number of turns of the exposed wiring portion is five and FIG. 12C is a perspective view of the coil spring which has a handcuff portion C and which the number of turns of the exposed wiring portion is six.

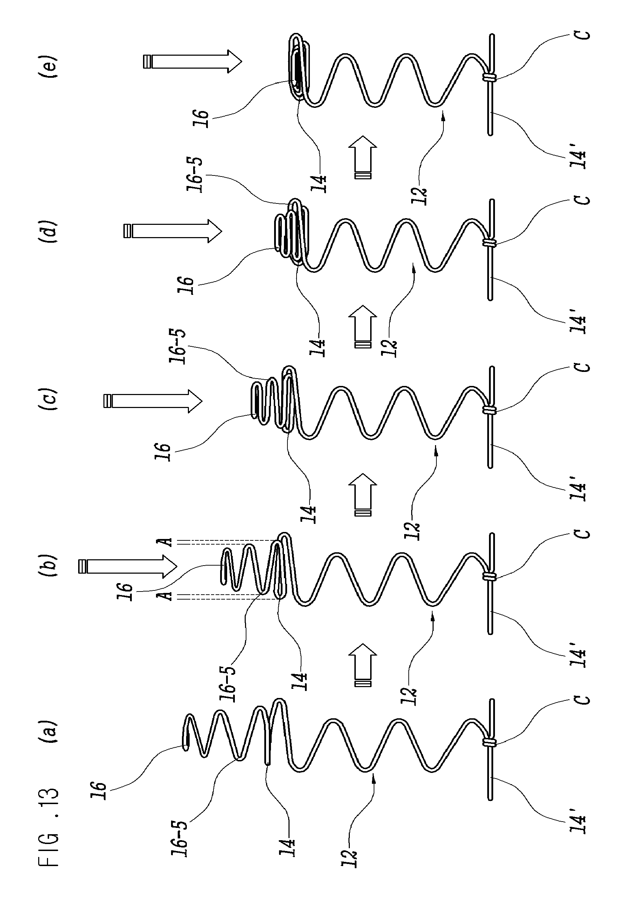

FIG. 13 shows a concept of a process in which a coil spring wherein each of a upper and lower end wiring portions has an inner diameter shorter than or equal to the outer diameter of the turns of the body wiring portion according to the present invention is compressed, in which upper and lower end wiring portions of the coil spring have the shape of a round spring, and FIG. 13 is a cross-sectional view of the process in which the coil spring is compressed.

### DETAILED DESCRIPTION OF THE INVENTION

Reference will now be made in detail to various embodiments of the present invention, examples of which are illustrated in the accompanying drawings and described below.

As shown in FIG. 4A to FIG. 13, an embodiment of the present invention provides a high tension coil spring for a bed mattress that includes a body wiring portion 12 which is placed in a space between the upper edge member 20 and the lower edge member 20' of a mattress frame, upper and lower end wiring portions 14 and 14' which are respectively provided on opposite ends of the body wiring portion 12 and are set within a range in which the upper and lower edge members 20 and 20' are disposed, and an upper exposed wiring portion 16 which upwardly extends from the upper end wiring portion 14 exposed from the upper edge member 20, and/or a lower exposed wiring portion 16' which downwardly extends from the lower end wiring portion 14' exposed from the lower edge member 20'.

It is characterized in that turns of the upper exposed wiring portion and/or turns of the lower exposed wiring portion respectively have a declining diameter to be compressed without being contacted by each other, wherein each of the upper and lower end wiring portions has an inner diameter to be apart by a gap(A) from the upper and/or the lower exposed wiring portion so that the latter may be compressed without being contacted with the former, thereby frictional noise between the upper and/or the lower end wiring portions 14 and 14' and the upper and/or the lower exposed wiring portions 16 and 16' is prevented.

Herein, since the upper and lower edge members 20 and 20' and helical coils 30 are well-known in the related art, they will refer to the same reference numerals in FIG. 1A to FIG. 3B. Disclosure will be limited herein to a coil spring 10, a plurality of which is sequentially disposed between the upper and lower edge members 20 and 20'.

Reference numeral "D" shown in FIG. 9A to FIG. 13 indicates a convex portion which is formed in at least one of the upper and lower end wiring portions 14 and 14' so as to increase the inner diameter. It is preferred that at least one of the upper and lower end wiring portions 14 and 14' be provided with one or two convex portions D.

In addition, depending on the shape of the upper and lower end wiring portions 14 and 14' and the structure of the wiring portions, the coil spring 10 can be implemented as a round coil spring, as shown in FIG. 5A, FIG. 5B, FIG. 6A and FIG. 6B, an offset coil spring, as shown in FIG. 7A, FIG. 7B, FIG. 8A and FIG. 8B, or a round-offset coil spring, as shown in FIG. 9A, FIG. 9B, FIG. 10A and FIG. 10B.

In addition, when the coil spring 10 is implemented as the round coil spring, the upper exposed wiring portion 16 can be configured as shown in part (a) of FIG. 6A, the lower exposed wiring portion 16' can be configured as shown in part (b) of FIG. 6A, or both the upper exposed wiring portion 16 and the lower exposed wiring portion 16' can be configured as shown in part (c) of FIG. 6A.

Furthermore, when the coil spring 10 is implemented as the offset coil spring, the upper exposed wiring portion 16 can be configured as shown in part (a) of FIG. 8A, the lower exposed wiring portion 16' can be configured as shown in part (b) of FIG. 8A, or both the upper exposed wiring portion 16 and the lower exposed wiring portion 16' can be configured as shown in part (c) of FIG. 8A.

In addition, when the coil spring 10 is implemented as the round-offset coil spring, the upper exposed wiring portion 16 can be configured as shown in part (a) of FIG. 10A, the lower exposed wiring portion 16' can be configured as shown in part (b) of FIG. 10A, or both the upper exposed wiring portion 16 and the lower exposed wiring portion 16' can be configured as shown in part (c) of FIG. 10A.

Furthermore, in the round coil spring, as shown in part (a) of FIG. 11, the lower end wiring portion and/or the coil end of the upper end wiring portion may form a linear free end B which is opened without being engaged with the wiring portion. In the offset coil spring, as shown in part (b) of FIG. 11, the lower end wiring portion and/or the coil end of the upper end wiring portion may form a linear free end B which is opened without being engaged with the wiring portion. In the round-offset coil spring, as shown in part (c) of FIG. 11, the lower end wiring portion and/or the coil end of the upper end wiring portion may form a linear free end B which is opened without being engaged with the wiring portion.

In addition, as shown in FIG. 12A, a handcuff portion C and the exposed wiring portion which the number of turns of the exposed wiring portion is four may be formed in the round coil spring, the offset coil spring and the round-offset coil spring. As shown in FIG. 12B, a handcuff portion C and the exposed wiring portion which the number of turns of the exposed wiring portion is five may be formed in the round coil spring, the offset coil spring and the round-offset coil spring. As shown in FIG. 12C, a handcuff portion C and the exposed wiring portion which the number of turns of the exposed wiring portion is six may be formed in the round coil spring, the offset coil spring and the round-offset coil spring.

The gap A can be applied to any type of the coil spring 10 which are used in the field of bed mattresses in place of the round coil spring and the offset coil spring, the round-offset coil spring, and this structure, of course, belongs to the scope of the present invention.

In addition, the coil spring 10 includes the body wiring portion 12, the upper and lower end wiring portions 14 and 14' and the upper and lower exposed wiring portions 16 and 16'. In particular, the gap A is provided on at least one of the upper and lower end wiring portions 14 and 14'.

The body wiring portion 12 refers to the wiring portion which forms the main body of the coil spring 10 in order to support the entire load applied to the coil spring 10. The body wiring portion 12 is interposed in the vertical direction in the space between the upper and lower edge members 20 and 20' of a mattress frame in order to absorb the weight of a mattress user. The body wiring portion 12 can have a variety of shapes including the shape of a doubleheaded drum.

In addition, the upper and lower end wiring portions 14 and 14' refer to the wiring portions which are respectively formed on the upper and lower ends of the body wiring portion 12 so as to extend in the horizontal direction and are set within the range in which the upper and lower edge members 20 and 20' are disposed. The upper and lower end wiring portions 14 and 14' are butted to the upper and lower edge members 20 and 20', and are fixed using fixing pins or helical coils.

Here, the upper and lower end wiring portions 14 and 14' can be formed at an angle of incline that deviates from the horizontal state, depending on the angle of incline of the upper and lower exposed wiring portions 16 and 16'. Of course, this structure also belongs to the scope of the present invention.

Although the upper and lower end wiring portions 14 and 14' are formed at a slightly inclined angle, the upper and lower end wiring portions 14 and 14' can be horizontally set when they are butted to the upper and lower edge members 20 and 20' and engaged with the helical coils or the fixing pins 30.

In addition, the upper and lower exposed wiring portions 16 and 16' refer to the wiring portions which extend from at least one of the upper end wiring portions 14 and the lower end wiring portions 14' and cooperate with the body wiring portion 12 in order to absorb a load applied to the bed mattress. The upper and lower exposed wiring portions 16 and 16' are wound such that their diameter is smaller than the diameter of the body wiring portion 12.

The body wiring portion 12 absorbs shock in response to a large load applied to the bed mattress, whereas the upper and lower exposed wiring portions 16 and 16' absorb shock in response to a smaller load applied to the bed mattress.

Here, the upper and lower turns 16-5 and 16-5' formed on the upper and lower exposed wiring portions 16 and 16' refer to the portions of the upper and lower exposed wiring portions 16 and 16' which are positioned close to the upper and lower end wiring portions 14 and 14'.

Although the number of turns of the upper and lower exposed wiring portions 16 and 16' is preferably 3 to 6 in order to induce high tension to the coil spring 10, the number of turns less than 3 or greater than 6 also belongs to the scope of the present invention.

The gap A is configured so as to increase the inner diameter of the upper and lower end wiring portions 14 and 14', thereby defining space through which the upper and lower turns 16-5 and 16-5' of the upper and lower exposed wiring portions 16 and 16' can move upward and downward. It is preferred that the gaps A be provided by increasing the inner diameter of the upper and lower end wiring portions 14 and 14' so as to be longer than the outer diameter of the upper and lower turns 16-5 and 16-5' of the upper and lower exposed wiring portions 16 and 16'.

In addition, the wiring of the upper and lower end wiring portions 14 and 14' can be formed so as to be inclined at a preset angle with respect to the horizontal surface in the process in which the gap(A) is formed. Consequently, there is no contact between the upper and lower end wiring portions 14 and 14' and the upper and lower turns 16-5 and 16-5' of the upper and lower exposed wiring portions 16 and 16', thereby preventing frictional noise. This structure also belongs to the scope of the present invention.

Furthermore, although it is preferred that the shape of the gap A correspond to the shape of the upper and lower end wiring portions 14 and 14', the gap A can have the shape of a round coil spring, an offset coil spring or a round-offset coil spring in consideration of the structural characteristics of the coil spring 10.

A reference will be now made to the operation of the present invention with reference to FIG. 5A and FIG. 5B.

First, since the process of fabricating the spring assembly 1 and the process of fabricating a bed mattress to which the spring assembly 1 is applied are well known in the related art, descriptions thereof will be omitted. Disclosure will be limited to the shock-absorbing structure of the coil springs 10.

In particular, it is to be understood that the operating structure will be described on assumption that the coil spring 10 having the structure of the present invention is applied to the bed mattress.

As shown in part (a) of FIG. 5A and FIG. 5B, if no load is applied to the bed mattress to which the coil spring 10 is applied, the upper exposed wiring portion 16 is set such that it protrudes above the upper edge member 20 and stays at that position.

In contrast, as shown in part (b) of FIG. 5A and FIG. 5B, when the bed mattress to which the coil spring 10 is applied is subjected to a small load from the user, the upper exposed wiring portion 16 is depressed downward to the amount corresponding to the compressive load, thereby absorbing the compressive load.

In particular, as shown in part (c) of FIG. 5A and FIG. 5B, when the bed mattress to which the coil spring 10 is applied is subjected to a large load from the user, the upper turns 16-5 of the upper exposed wiring portion 16 move downward through the gap A, thereby absorbing the compressive load.

In addition, as shown in parts (d) and (e) of FIG. 5A and FIG. 5B, when the bed mattress to which the coil spring 10 is applied is subjected to a stronger load, the upper turns 16-5 of the upper exposed wiring portion 16 move further downward through the gap A such that the range in which the upper exposed wiring portion 16 moves upward and downward is maximized, thereby maximizing the shock-absorbing efficiency.

Since the gap A of the upper end wiring portion 14 defines the space where the upper turns 16-5 of the upper exposed wiring portion 16 can move upward and downward, the upper turns 16-5 of the upper exposed wiring portion 16 does not come into contact with the upper end wiring portion 14 while moving upward and downward.

Accordingly, when a strong load is applied to the bed mattress to which the coil spring 10 is applied, the gap A of the upper end wiring portion 14 prevents frictional noise between the upper end wiring portion 14 and the other portions of the coil spring 10 and increases the elasticity of the exposed wiring portions 16 and 16', thereby increasing the longevity of a product and improving the quality of the product.

The foregoing descriptions of the specific exemplary embodiments of the present invention have been presented for the purposes of illustration with reference to the accompanying drawings. A person skilled in the art will appreciate that various modifications and alternatives are possible without departing from the scope of the present invention that shall be defined by the Claims appended hereto and their equivalents.

## Claims

1. A high tension coil spring for a bed mattress, comprising:
a body wiring portion which is placed in a space between an upper edge member and a lower edge member;
upper and lower end wiring portions which are respectively provided on the opposite ends of the body wiring portion and are set within a range in which upper and lower edge members are disposed; and
an upper exposed wiring portion which upwardly extends from the upper end wiring portion exposed from the upper edge member, and/or a lower exposed wiring portion which downwardly extends from the lower end wiring portion exposed from the lower edge member;
**characterized in that** turns of the upper exposed wiring portion and/or turns of the lower exposed wiring portion respectively have a declining diameter to be compressed without being contacted by each other,
wherein each of the upper and lower end wiring portions has an inner diameter to be apart by a gap(A) from the upper and/or the lower exposed wiring portion so that the latter may be compressed without being contacted with the former,
thereby frictional noise between the upper and/or the lower end wiring portions and the upper and/or the lower exposed wiring portions is prevented.

2. The high tension coil spring for a bed mattress as claimed in claim 1, wherein each of the upper and lower end wiring portions has an inner diameter longer than the outer diameter of the turns of the body wiring portion.

3. The high tension coil spring for a bed mattress as claimed in claim 1, wherein each of the upper and lower end wiring portions has an inner diameter shorter than or equal to the outer diameter of the turns of the body wiring portion.

4. The high tension coil spring for a bed mattress as claimed in claim 1, wherein the coil spring comprises an offset coil spring.

5. The high tension coil spring for a bed mattress as claimed in claim 1, wherein the coil spring comprises a round coil spring.

6. The high tension coil spring for a bed mattress as claimed in claim 1, wherein the coil spring comprises a round-offset coil spring.

7. The high tension coil spring for a bed mattress as claimed in claim 1, wherein the gap (A) is formed corresponding to the shape of the upper and/or lower turns of the upper and/or lower exposed wiring portions.

8. The high tension coil spring for a bed mattress as claimed in claim 1, wherein the gap (A) is formed corresponding to the shape of the upper and/or lower end wiring portions.

9. The high tension coil spring for a bed mattress as claimed in claim 1, wherein the number of turns of each of the upper and lower exposed wiring portion ranges from 3 to 6.
